# EUROPEAN PATENT SPECIFICATION

(11) **EP 0 971 565 B1**
(45) Date of publication and mention of the grant of the patent: **02.10.2002**
(21) Application number: 99113078.2
(22) Date of filing: 06.07.1999
(51) Int. Cl.: H05B 33/08, H05B 37/02, H05B 41/04, H05B 41/30, H05B 41/24, H03K 17/60, G06F 3/14

(54) **Drive circuit for EL element**
Schaltungsanordnung für Entladungslampen (EL)
Circuit de commande pour lampe à discharge (EL)

(30) Priority: 08.07.1998 JP 19300598
(43) Date of publication of application: 12.01.2000
(73) Proprietor: SEIKO PRECISION INC., Tokyo (JP)
(72) Inventor: Yamazaki, Hiroshi, c/o Seiko Precision Inc., Narashino-shi, Chiba-ken (JP)
(74) Representative: Grünecker, Kinkeldey, Stockmair & Schwanhäusser Anwaltssozietät

(56) References cited:
- FR-A- 2 317 722
- US-A- 4 540 899
- PATENT ABSTRACTS OF JAPAN vol. 096, no. 001, 31 January 1996 (1996-01-31) & JP 07 240289 A (TOSHIBA LIGHTING & TECHNOL CORP), 12 September 1995 (1995-09-12)

## Description

### BACKGROUND OF THE INVENTION

### 1. Field of the Invention

This invention relates to a drive circuit for EL (Elector luminescence) element.

### 2. Description of the Related Art

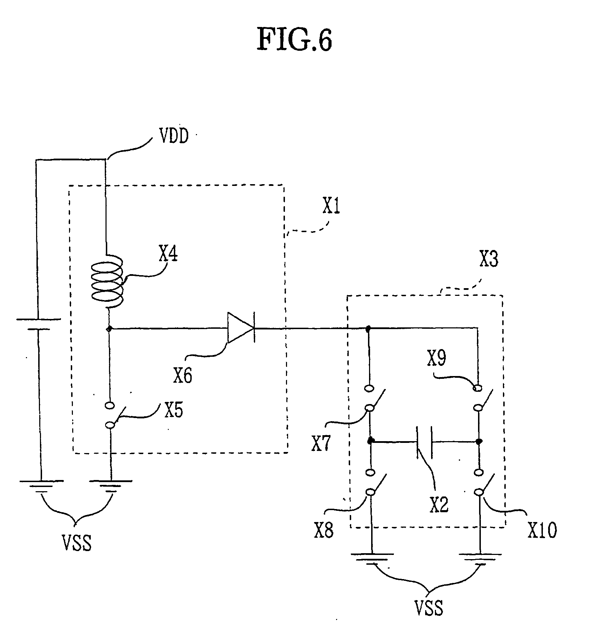

There are cases at present time that the EL element is used as a backlight for a liquid crystal display provided on a small-sized electronic appliance, such as a wristwatch. A small-sized drive circuit is required to generate an alternating current to drive an EL element of the above kind. Although it has been a general practice so far to use a transformer as a voltage increasing element, this is not advantageous in proceeding size reduction. There is a proposal, for example, on a drive circuit as shown in Fig. 6. This includes an voltage increasing circuit X1 to increase the voltage of between a power terminal VDD and a power terminal VSS, and an H bridge circuit X3 to apply an output voltage of the voltage increasing circuit X1 to an EL element X2. The voltage increasing circuit X1 has a coil X4 and switch element X5 connected in series between the power terminal VDD and the power terminal VSS, and a diode X6 connected to a connection point between the coil X4 and the switch element X5. By intermittently turning on the switch element X5, an induced voltage is caused on the coil X4 and outputted through the diode X6. The H bridge circuit X3 has switching elements X7, X8 connected in series between the diode X6 and the power terminal VSS, and switch elements X9, X10 connected in series similarly between the diode X6 and the power terminal VSS, and an EL element X2 provided between a connection point of the switch elements X7, X8 and a connection point of the switch elements X9, X10, thereby charging and discharging the EL element in respective directions.

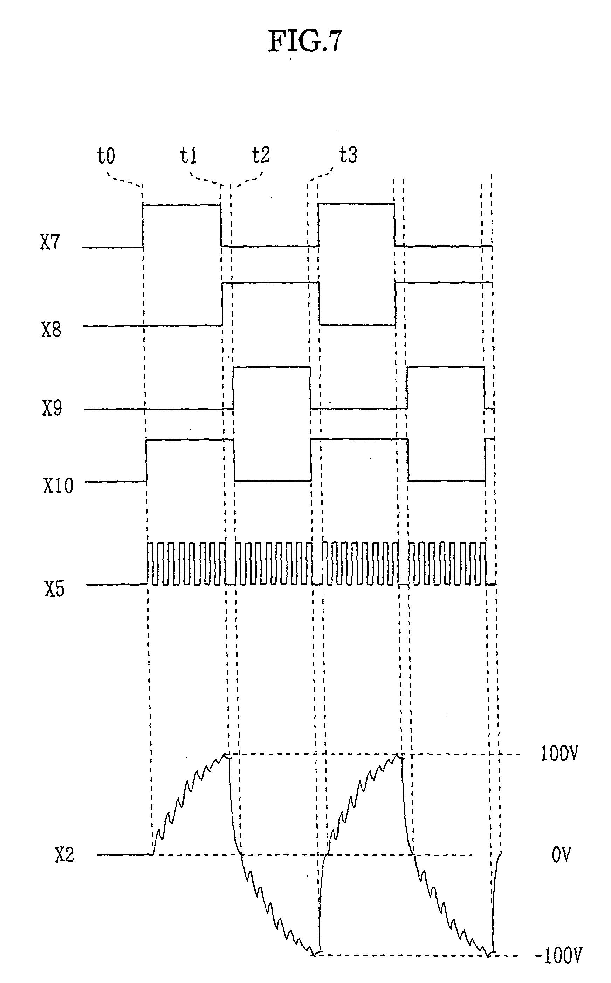

Explaining concretely with reference to a timing chart of Fig. 7, for example, if in timing t0 the switch elements X7, X10 are first turned on and then the switch element X5 is started of intermittent tuning-on operation, the EL element X2 is started of being charged to gradually increase a terminal-to-terminal voltage of the EL element X2 to approximately 100 V. Next, if in timing t1 the switch element X5 is stopped of intermittent turning on operation and the switch element X7 is turned off and the switch element X8 is turned on, then the charged voltage on the EL element X2 is discharged. Next, in timing t2 the switch element X10 is turned off and the switch element X9 is turned on, and then the switch element X5 is started of intermittent turning on operation. This causes the EL element X2 to be charged from an opposite terminal side to that in the timing t0. Next, if in timing t3 the switch element X5 is stopped of intermittent turning on operation and the switch element X9 is turned off and the switch element X10 on, then the charged voltage on the EL element X2 is discharged. By repeating the above operation, the EL element X2 is discharged in respective directions. Each switch element uses, for example, a bipolar transistor or a MOS transistor.

However, in the structure as shown in Fig. 6 discharge is abruptly carried out in a short circuit state, thereby posing the following problems.
(1) Where the EL element uses a piezoelectric material, abruptly changed charging voltage causes deformation in the E1 element, producing sound.
(2) Instantaneous flow of electric current might cause burning at or around an electrode of the EL element where electric current concentrates.
(3) Large current at discharge causes radio wave noise, exerting noise to a peripheral circuit.
(4) Because the EL element has a terminal-to-terminal voltage waveforms containing a high frequency component at discharge, luminance half valued period (life) becomes short.
(5) Because of flowing large current, the transistor used as a switch element require increase in size.

FR-A-2 317 722 discloses a control and drive circuit for an EL element comprising a coil and a switch element and a diode in first series connection path for charging a capacitive load forming the EL element and also in a second connection path for discharging this EL element. The capacity of the EL element together with each coil of the series connection path forms a resonance frequency circuit for charging and discharging the capacity when the respective one of the two switches is closed in order to connect the capacity via the respective series connection path with a voltage source.

US-A-4 540 899 discloses an energizing circuit for printer hammer drive coils in which a single transistor and a single diode is employed for each drive coil. Two voltage source means, one of which may be a capacitor, are connected in series. The drive coil is connected in series with the single transistor and one of the voltage sources is energized when the transistor is on. The drive coil discharges in a series circuit including the diode and the other of the voltage sources and charges the later voltage source when the transistor is off. An energy recuperation circuit is disclosed when receiving energy from the later voltage source and returning it to the first voltage source.

Therefore, in the present invention, a coil and a switch element are provided on a discharge path for an EL element so that the switch element is kept on in a proper duration to cause intermittent discharge through the coil, thereby suppressing the EL element from abruptly discharging. Due to this, it is possible to suppress noise and electrode burning and reduce the size of the switch element.

### SUMMARY OF THE INVENTION

In a drive circuit for an EL element with which repeated is an operation that an EL element is gradually charged to increase a terminal-to-terminal voltage of the EL element to a required voltage for driving and thereafter causing discharge, a coil and a switch element are provided on a discharge path of the EL element to put the switch element on in a proper duration and cause intermittent discharge through the coil.

Preferably, a drive circuit for an EL element, comprises: a first switch element for intermittently connecting in a first time period a coil between a first power source and a second power source having a potential lower than the first power source to cause an induced voltage on the coil; an H bridge circuit for connecting an EL element in respective directions between a terminal to output the induced voltage and a terminal of the second power source; and a second switch element for intermittently connecting a terminal on a higher potential side of the EL element charged by the induced voltage to the coil in a second time period after the first time period to cause the EL element to discharge through the coil.

More preferably, a drive circuit for an EL element, comprises: a first switch element for intermittently connecting in a first time period a first coil between a first power source and a second power source having a potential lower than the first power source to cause an induced voltage on the coil; an H bridge circuit for connecting an EL element in respective directions between a terminal to output the induced voltage and a terminal of the second power source; and a second switch element for intermittently connecting a terminal on a higher potential side of the EL element charged by the induced voltage to a second coil in a second time period after the first time period to cause the EL element to discharge through the coil.

More preferably, the induced voltage is supplied to the EL element after being charged by a capacitor, and a charge voltage of the capacitor being discharged together with discharge of the EL element through the coil.

More preferably, the intermittent discharge time is gradually increased.

More preferably, the induced voltage is supplied to the EL element after being charged by a capacitor, and a charge voltage of the capacitor being discharged together with discharge of the EL element through the coil.

### BRIEF DESCRIPTION OF THE DRAWINGS

Fig. 1 is an explanatory diagram for explaining a structure of a first embodiment of the present invention;
Fig. 2 is a timing chart for explaining the operation of Fig. 1;
Fig. 3 is an explanatory diagram for explaining a structure of a second embodiment of the present invention;
Fig. 4 is an explanatory diagram for explaining a structure of a third embodiment of the present invention;
Fig. 5 is an explanatory diagram for explaining a structure of a fourth embodiment of the present invention;
Fig. 6 is an explanatory diagram for explaining a structure of a prior art; and
Fig. 7 is a timing chart for explaining the operation of Fig. 6.

### DETAILED DESCRIPTION OF THE PREFERRED EMBODIMENT

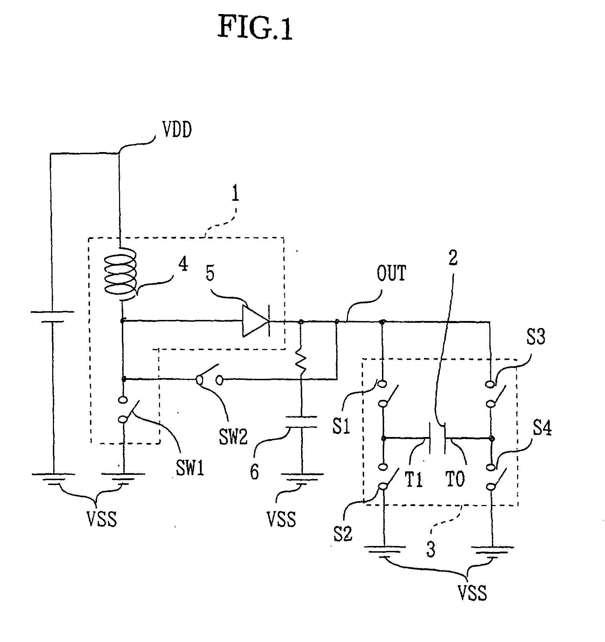

Now explained is a drive circuit to an EL element according to a first embodiment. Fig. 1 is an explanatory diagram showing a configuration of a present embodiment. The drive circuit to an EL element in the embodiment includes a voltage increasing circuit 1 to increase a voltage between a power terminal VDD and a power terminal VSS, and an H bridge circuit 3 to apply an output voltage of the voltage increasing circuit 1 to a EL element 2.

The voltage increasing circuit 1 has a coil 4 and a first switch element SW1 connected in series between the power terminal VDD and the power terminal VSS, and a diode 5 connected to a connection point between the coil 4 and the first switch element SW1. By intermittently turning on the first switch element SW1, an induced voltage is caused on the coil 4 and outputted through the diode 5. Also, a capacitor 6 for output voltage stabilization is connected between an output side of the diode 5 and the power terminal VSS, which has this connection point as an output terminal OUT. Incidentally, it is possible to configure to charge only the EL element 2 without providing with a capacitor 6.

The H bridge circuit 3 has switch elements S1, S2 connected in series between the output terminal OUT and the power terminal VSS, and switch elements S3, S4 connected in series similarly between the output terminal OUT and the power terminal VSS. Between a connection point of the switch elements S1, S2 and a connection point of the switch elements S3, S4, the EL element 2 is connected so as to be charged and discharged in a respective directions.

Also, the second switch element SW2 is provided between the connection point of the first switch element SW1 and the coil 4 and the output terminal OUT. The EL element 2 is discharged by flowing a current toward a side of the power terminal VDD through this second switch element SW2 and the coil 4.

Although not particularly shown, each of the above switch elements may be configured by a bipolar transistor, MOS transistor or the like, and properly controlled of on and off by a control circuit.

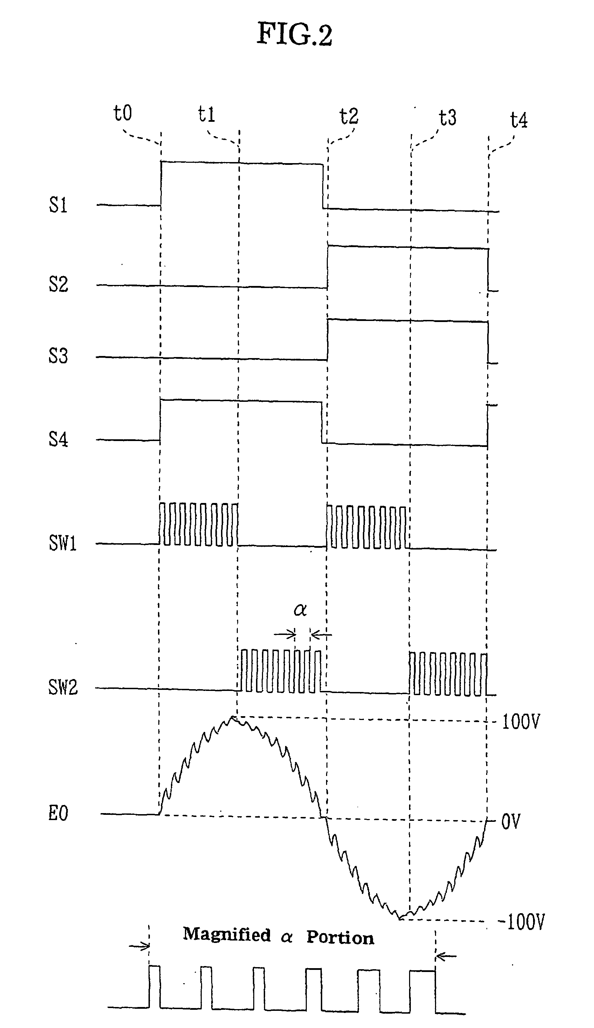

Now the operation of the present embodiment is explained with reference to a timing chart of Fig. 2. In the same figure, SW1 and SW2 respectively represent the first and second switch elements SW1 and SW2 in on-off states. S1 to S4 show on-and-off states of the switch elements S1 to S4 wherein "H" represents on and "L" off. Also, in the same figure, on timing is typically shown. The frequency that the first or second switch element SW1, SW2 is actually at 10 kHz to 50 kHz. In particular, the on duration of the second switch element SW2 gradually increases as illustrated in α part magnification. Meanwhile, although not shown in the same figure, the frequency that the switch element S1 to S4 turns on is at 400 Hz to 500 Hz. Also, in the same figure E0 typically shows a terminal-to-terminal voltage across the EL element with respect to one terminal T0 of the EL element 2 as a reference.

First, in timing t0 the switch elements S1, S4 are turned on and then the first switch element SW1 is started of intermittent turning on operation. As a result, the capacitor 6 is charged to start charging the EL element 2 from a side of the terminal T1. The terminal-to-terminal voltage of the EL element 2 is gradually increased to approximately 100 V.

Then, in timing t1 the first switch element SW1 is stopped of intermittent turning on operation and the second switch element SW2 is started of intermittent tuning-on operation. The turning on of the second switch element SW2 allows the charges on the capacitor 6 and the EL element 2 to be discharged toward the power terminal VDD through the switch element SW1, second switch element SW2 and coil 4. Meanwhile, because the power terminal VDD is connected to a battery (e.g. 1.5 V), it can be considered that a current flow through the battery toward the power terminal VSS. Here, an abrupt discharge is suppressed by a time constant of the coil 4. Each time the second switch element SW2 is turned on, the capacitor 6 and the EL element 2 are discharged to gradually decrease the terminal-to-terminal voltage of the EL element 2. This suppresses the discharge.

Then, if the discharge ends, the second switch element SW2 is stopped of intermittent turning on operation and the switch elements S1, S4 are turned off. In timing t2 immediately thereafter, the switch elements S2, S3 are turned on and then the first switch element SW1 is started of intermittent turning on operation. As a result, the capacitor 6 is charged to start charging the EL element 2 from the terminal T0 side. The terminal-to-terminal voltage of the EL element 2 is gradually increased to approximately 100 V.

Next, in timing t3 the first switch element SW1 is stopped of intermittent turning on operation, and the second switch element SW2 is started of intermittent turning on operation. The turning on of the second switch element SW2 allows the charges on the capacitor 6 and the EL element 2 to be discharged toward the power terminal VDD through the switch element S2, second switch element SW2 and coil 4. Thus the terminal-to-terminal voltage of the EL element 2 gradually decreases.

If the discharge is terminated, the second switch element SW2 is stopped of intermittent turning on operation and the switch elements S2, S3 is turned off.

Thereafter, the EL element 2 is driven by repeating the operation of from the timing t0.

As described above, in the present embodiment the charge on the EL element 2 is intermittently discharged through the coil 4, thus suppressing against abrupt discharge, noise and burning-on of electrodes. Also, the switch element can be made smaller in size.

Particularly, if the second switch element SW2 is set to gradually increase its on duration, abrupt discharge is suppressed in a discharge initial time at which the EL element 2 is high in terminal-to-terminal voltage. Also, the voltage waveform of the EL element 2 terminal-to-terminal voltage is put close to a sine wave, improving the drive efficiency to the EL element 2.

In the meanwhile, the present invention is no limited to the structure of the above-described first embodiment.

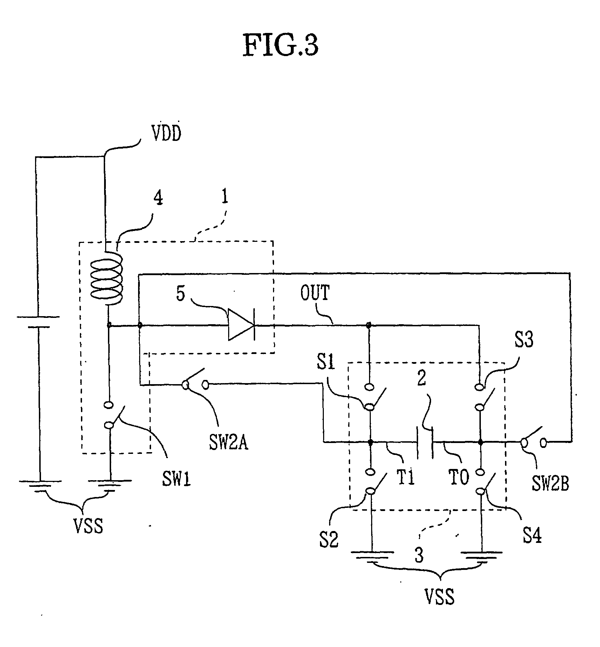

Now a second embodiment is shown in Fig. 3. Incidentally, in the same figure and the subsequent figures, the same reference characters as those of Fig. 1 are denoted the same components as those of Fig. 1. The second embodiment is configured to cause the charge on the EL element 2 to be discharged without passing through the switch elements S1, S3. For this reason, SWA and SWB are provided as the second switch element. This embodiment operates similarly to the first embodiment except that the second switch elements SWA, SWB are alternately used depending on a direction of charging to the EL element 2, thus providing a similar effect to that of the first embodiment.

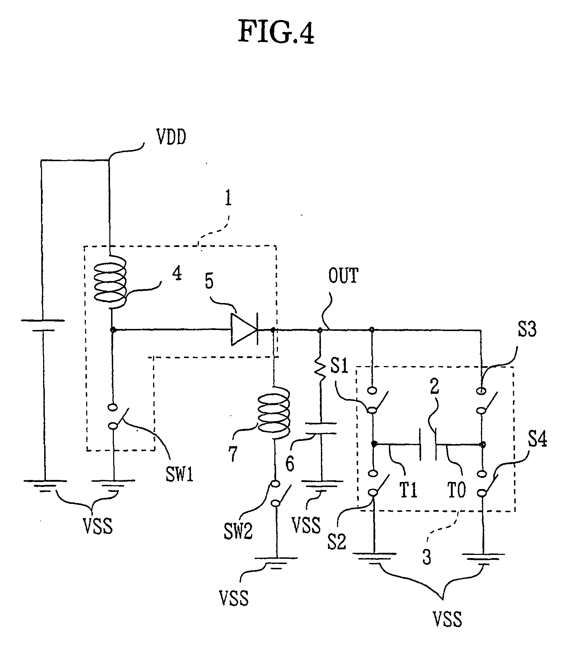

Next, a third embodiment is shown in Fig. 4. This embodiment is separately provided with a coil 7 for discharge. That is, a coil 7 and a second switch element SW2 are connected in series between the output terminal OUT and the power terminal VSS. In also this embodiment, each switch element is operated as shown in a timing chart of Fig. 2 to cause discharge from the EL element 2 toward the power terminal VSS through the coil 7. This embodiment also provides a similar effect to that of the first embodiment.

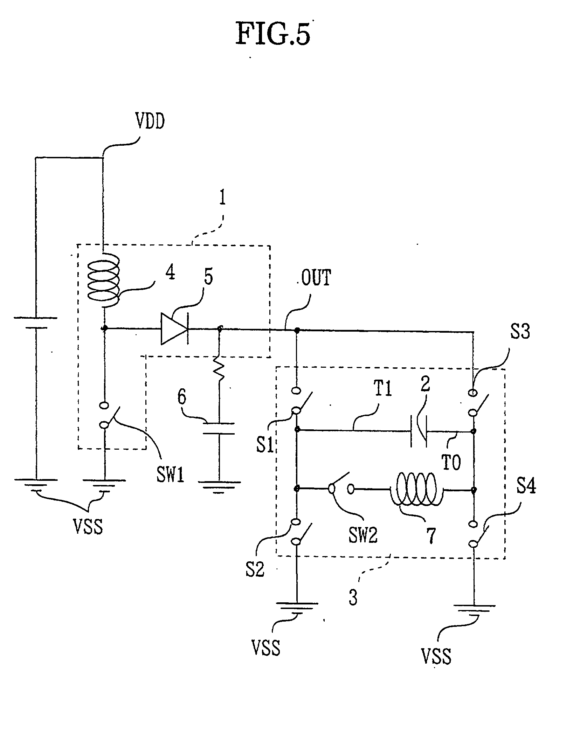

Fig. 5 shows a fourth embodiment. This embodiment is also provided separately with a discharge coil 7 similarly to the third embodiment. However, the arrangement is different from that of the above embodiment. In the present embodiment, a series connection of the coil 7 and second switch element SW2 is connected in parallel with the EL element 2. As for operation of the present embodiment, each switch element is operated as shown in the timing chart of Fig. 2 to cause discharge from the EL element 2 through the coil 7 toward the power terminal VSS. The present embodiment also provides a similar effect to that of the first embodiment.

According to the present invention, a coil and a switch element are provided on a discharge path for an EL element so that the switch element is kept on in a proper duration to cause intermittent discharge through the coil, thereby suppressing the EL element from abruptly discharging. Due to this, it is possible to suppress noise and electrode burning and reduce the size of the switch element, e.g. bipolar transistor or MOS transistor.

Also, if the second switch element has an on duration gradually increased, abrupt discharge can be suppressed in a discharge initial time in which the EL element is high in voltage at between its respective terminals. Simultaneously, the voltage waveform of between the terminals of the EL element is put close to a sine wave, and the EL element can be improved in drive efficiency.

## Claims

1. A drive circuit for an EL element (2), comprising:
a first switch element (SW1) for intermittently connecting in a first time period (t0-t1) a first coil (4) between a first power source (VDD) and a second power source (VSS) having a potential lower than said first power source to cause an induced voltage on said coil (4);
an H bridge circuit (3) for connecting an EL element (2) in respective directions between a terminal (T1, T0) to output said induced voltage and a terminal of said second power source (VSS); and
a second switch (SW2) element for intermittently connecting a terminal (T1, T0) on a higher potential side of said EL element (2) charged by said induced voltage to said coil (4) in a second time period (t1-t2) after said first time period (t0-t1) to cause said EL element (2) to discharge through said coil (4).

2. A drive circuit according to claim 1, wherein said induced voltage is supplied to said EL element (2) after being charged by a capacitor (6) and a charge voltage of said capacitor (6) being discharged together with discharge of said EL element (2) through said coil (4).

3. A drive circuit for an EL element (2), comprising:
a first switch element (SW1) for intermittently connecting in a first time period a first coil (4) between a first power source (VDD) and a second power source (VSS) having a potential lower than said first power source to cause an induced voltage on said first coil (4);
an H bridge circuit (3) for connecting an EL element (2) in respective directions between a terminal (T1, T0) to output said induced voltage and a terminal of said second power source (VSS); and
a second switch element (SW2) for intermittently connecting a terminal (T1, T0) on a higher potential side of said EL element (2) charged by said induced voltage to a second coil (7) in a second time period after said first time period to cause said EL element (2) to discharge through said second coil (7).

4. A drive circuit for an EL element according to claim 3, wherein said induced voltage is supplied to said EL element (2) after being charged by a capacitor (6), and a charge voltage of said capacitor (6) being discharged together with discharge of said EL element (2) through said second coil (7).

5. A drive circuit for an EL element according to any one of claims 1 to 4, wherein said intermittent discharge time is gradually increased.

## Patentansprüche

1. Treiberschaltung für ein EL-Element (2), die umfasst:
ein erstes Schaltelement (SW1), das in einem ersten Zeitabschnitt (t0-t1) eine erste Spule (4) zwischen einer ersten Stromquelle (VDD) und einer zweiten Stromquelle (VSS), deren Potential niedriger als das der ersten Stromquelle ist, intermittierend verbindet, um an der Spule (4) eine induzierte Spannung zu erzeugen;
einen H-Brückenkreis (3), der ein EL-Element (2) in jeweiligen Richtungen zwischen einem Anschluss (T1, T0) zum Ausgeben der induzierten Spannung und einem Anschluss der zweiten Stromquelle (VSS) verbindet, und
ein zweites Schaltelement (SW2), das einen Anschluss (T1, T0) auf einer Seite höheren Potentials des durch die induzierte Spannung aufgeladenen EL-Elements (2) in einem zweiten Zeitabschnitt (t1-t2) nach dem ersten Zeitabschnitt (t0-t1) mit der Spule (4) intermittierend verbindet, um das EL-Element (2) zu veranlassen, sich über die Spule (4) zu entladen.

2. Treiberschaltung nach Anspruch 1, bei der die induzierte Spannung dem EL-Element (2) nach dem Laden durch einen Kondensator (6) zugeführt wird, und eine Ladespannung des Kondensators (6) zusammen mit der Entladung des EL-Elements (2) über die Spule (4) entladen wird.

3. Treiberschaltung für ein EL-Element (2), die umfasst:
ein erstes Schaltelement (SW1), das in einem ersten Zeitabschnitt eine erste Spule (4) zwischen einer ersten Stromquelle (VDD) und einer zweiten Stromquelle (VSS), deren Potential niedriger als das der ersten Stromquelle ist, intermittierend verbindet, um an der ersten Spule (4) eine induzierte Spannung zu erzeugen;
einen H-Brückenkreis (3), der ein EL-Element (2) in jeweiligen Richtungen zwischen einem Anschluss (T1, T0) zum Ausgeben der induzierten Spannung und einem Anschluss der zweiten Stromquelle (VSS) verbindet, und
ein zweites Schaltelement (SW2), das einen Anschluss (T1, T0) auf einer Seite höheren Potentials des durch die induzierte Spannung aufgeladenen EL-Elements (2) in einem zweiten Zeitabschnitt nach dem ersten Zeitabschnitt mit einer zweiten Spule (7) intermittierend verbindet, um das EL-Element (2) zu veranlassen, sich über die zweite Spule (7) zu entladen.

4. Treiberschaltung für ein EL-Element nach Anspruch 3, bei der die induzierte Spannung nach dem Laden durch einen Kondensator (6) dem EL-Element (2) zugeführt wird, und eine Ladespannung des Kondensators (6) zusammen mit der Entladung des EL-Elements (2) über die zweite Spule (7) entladen wird.

5. Treiberschaltung für ein EL-Element nach einem der Ansprüche 1 bis 4, bei der die intermittierende Entladungszeit allmählich erhöht wird.

## Revendications

1. Circuit d'attaque pour élément électroluminescent (EL) (2), comprenant
- un premier élément de commutation (SW1) pour connecter de façon intermittente lors d'une première période de temps (t0-t1) une première bobine (4) entre une première source d'alimentation (VDD) et une seconde source d'alimentation (VSS) ayant un potentiel inférieur à celui de ladite première source d'alimentation afin de provoquer une tension induite dans ladite bobine (4) ;
- un montage en pont en H (3) pour connecter un élément EL (2) dans des directions respectives entre une borne (T1, T0) destinée à fournir en sortie ladite tension induite et une borne de ladite seconde source d'alimentation (VSS) ; et
- un second élément commutateur (SW2) pour connecter de façon intermittente une borne (T1, T0) d'un côté à potentiel plus élevé dudit élément EL (2) chargé par ladite tension induite à ladite bobine (4) lors d'une seconde période de temps (t0-t1) pour faire en sorte que ledit élément EL (2) se décharge à travers ladite bobine (4).

2. Circuit d'attaque selon la revendication 1, dans lequel ladite tension induite est délivrée audit élément EL (2) après qu'elle ait été chargée par un condensateur (6), et une tension de charge dudit condensateur (6) est déchargée en même temps que la décharge dudit élément EL (2) à travers ladite bobine (4).

3. Circuit d'attaque pour un élément EL (2), comprenant :
- un premier élément commutateur (SW1) pour connecter par intermittence lors d'une première période de temps une première bobine (4) entre une première source d'alimentation (VDD) et une seconde source d'alimentation (VSS) ayant un potentiel inférieur à celui de ladite première source afin de provoquer une tension induite sur ladite première bobine (4) ;
- un montage en pont en H (3) pour connecter un élément EL (2) dans des directions respectives entre une borne (T1, T0) destinée à fournir en sortie ladite tension induite et une borne de ladite seconde source d'alimentation (VSS) ; et
- un second élément de commutation (SW2) pour connecter de façon intermittente une borne (T1, T0) d'un côté à potentiel plus élevé dudit élément EL (2) chargé par ladite tension induite à une seconde bobine (7) lors d'une seconde période de temps pour faire en sorte que ledit élément EL (2) se décharge à travers ladite seconde bobine (7).

4. Circuit d'attaque pour un élément EL selon la revendication 3, dans lequel ladite tension induite est délivrée audit élément EL (2) après qu'elle ait été chargée par un condensateur (6), et une tension de charge dudit condensateur (6) est déchargée en même temps que la décharge dudit élément EL (2) à travers ladite seconde bobine (7).

5. Circuit d'attaque pour un élément EL selon l'une quelconque des revendications 1 à 4, dans lequel ledit temps de décharge intermittente est progressivement augmenté.
